## Europäisches Patentamt
## European Patent Office
## Office européen des brevets

(19)

(11) **EP 1 318 519 A2**

(12) ## EUROPEAN PATENT APPLICATION

(43) Date of publication:
**11.06.2003 Bulletin 2003/24**

(51) Int Cl.⁷: **G11B 27/00**, G11B 20/10, G10H 1/00

(21) Application number: **02026998.1**

(22) Date of filing: **05.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **05.12.2001 JP 2001371174**

(71) Applicant: **Pioneer Corporation
Meguro-ku, Tokyo (JP)**

(72) Inventors:
• **Miyashita, Masahiko, Tokorozawa Koujou
  Tokorozawa-shi, Saitama-ken 359-8522 (JP)**
• **Ogura, Koji, Tokorozawa Koujou
  Tokorozawa-shi, Saitama-ken 359-8522 (JP)**
• **Koizumi, Harui, Tokorozawa Koujou
  Tokorozawa-shi, Saitama-ken 359-8522 (JP)**

• **Eguchi, Hiroyasu, Tokorozawa Koujou
  Tokorozawa-shi, Saitama-ken 359-8522 (JP)**
• **Hase, Tetsuhiro, Tokorozawa Koujou
  Tokorozawa-shi, Saitama-ken 359-8522 (JP)**
• **Goda, Katsuhiko, Tokorozawa Koujou
  Tokorozawa-shi, Saitama-ken 359-8522 (JP)**
• **Oga, Chihaya, Tokorozawa Koujou
  Tokorozawa-shi, Saitama-ken 359-8522 (JP)**
• **Ohyama, Nobuo, Tokorozawa Koujou
  Tokorozawa-shi, Saitama-ken 359-8522 (JP)**
• **Chiba, Kensuke, Oomori, Koujou
  Oota-ku, Tokyo 143-8564 (JP)**
• **Inoshita, Gen, Oomori, Koujou
  Oota-ku, Tokyo 143-8564 (JP)**

(74) Representative: **Sajda, Wolf E., Dipl.-Phys. et al
MEISSNER, BOLTE & PARTNER
Postfach 86 06 24
81633 München (DE)**

(54) **Information playback apparatus**

(57) An information playback apparatus is provided, which provides a more convenient operation when a piece of music or the like is switched to another to be played continuously and to play a sound which sounds natural during the switching manipulation. When a loop-in button key (Pin) is manipulated to be ON, the number of beats (beat density) BPMreal per unit time of music or the like being played is measured, and a time (60/BPMreal) × Kbpm in proportion to a ratio of the beat density BPMreal to a certain beat density Kbpm pre-set by the user or the like is computed. Then, audio data, such as music, corresponding to a range from a point (tin) at which the loop-in button key (Pin) is manipulated to be ON to a point (Tout) at which the computed time has passed, is stored into a loop data memory (MLOOP). Consequently, repetitive playback is performed based on audio data stored in the loop data memory (MLOOP) at a tempo (the number of beats per unit time) adjusted to the certain beat density Kbpm until a loop-off button key (Poff) is manipulated to be ON.

FIG.1

EP 1 318 519 A2

**Description**

## BACKGROUND OF THE INVENTION

The present invention relates to an information playback apparatus for playing back information recorded in an information recording medium, such as a CD (Compact Disc), a DVD (Digital Versatile Disc), and an MD (Mini Disc).

The present application claims priority from Japanese Application No.2001-371174, the disclosure of which is incorporated herein by reference for all purposes.

Conventionally, an information playback apparatus called an effector furnished with an editing function has been known as an information playback apparatus for playing back information recorded in an information recording medium, such as a CD, a DVD, and an MD. When the effector plays music or the like recorded in an information recording medium, for example, the effector is able to produce sound effects by applying modulation in various manners to a sound signal being played back.

For instance, the effector is provided with a manipulation member called a jog dial made of a disc-shaped rotatable member. When the user or the like manipulates the jog dial to rotate at a desired speed, sound effects at a tempo (Beat Per Minute, abbreviated to BPM) different from that of the original music or the like are produced in response to the rotational speed.

To be more specific, it is known that by forcedly rotating the turntable of an analog record player, on which is placed an analog record, such as an LP, at the number of revolutions (rotational speed) different from the normal number of revolutions while the analog record is being played, the moving speed (running speed) of the stylus with respect to the recording grooves of the analog record is changed, thereby producing a sound at a tempo different from a tempo at which the original music or the like is played. The jog dial is provided to the conventional information playback apparatus to attain the same phenomenon as with the analog record player.

The jog dial is provided as an equivalent to the turntable of the analog record player, and when the user or the like changes the rotational speed of the jog dial by hand, he/she can produce the same sound effects produced when forcedly changing the moving speed of the stylus with respect to an analog record, that is, sound effects at a tempo different from that of the original music or the like.

The effector provided with such an editing function is used in a discotheque, for example. A manipulator called a disc jockey (DJ) enhances the stage effect by, for example, creating an enjoyable mood for those who are enjoying dancing by producing sound effects called rap sounds at a tempo different from that of the original music as he/she rotationally manipulates the jog dial.

Incidentally, when the user or the like wishes to randomly select more than one piece of music or the like from those recorded in an information recording medium to be played continuously using the information playback apparatus called the effector, this music selection involves complicated manipulations, which poses a problem that continuous playback cannot be realized easily.

To be more concrete, there may be a case where the manipulator called the disc jockey wishes to randomly select a piece of music which would match best with the ever-changing atmosphere of the dance hall from more than one piece of music recorded in an information recording medium. In this case, he/she has to select a piece of music to be played next when the piece of music being played is nearing the end, so that the next piece of music selected in advance is started to play as soon as the previous piece of music ends.

However, it is quite complicated to determine the timing of selecting the next piece of music while the previous piece of music is playing or to manipulate the effector with precise timing to play the previous piece of music and the next piece of music continuously. Thus, there is a problem that he/she may fail in performing continuous playback if his/her timing of selecting the next piece of music is too late and the previous piece of music has ended by the time he/she selects the next piece of music.

In such an event, a sound-cut state is present between the previous piece of music and the next piece of music, which poses a problem that those who are enjoying dancing are turned off by such a stage effect.

The manipulator may wish to randomly select the next piece of music through continuous playback while he/she manipulates the aforementioned jog dial. This case, in particular, involves further complicated manipulations, and raises a problem in terms of convenience of operation.

Some types of conventional information playback apparatus is furnished with a "random playback function, "by which a plurality of pieces of music which have been selected randomly and registered in advance are played automatically in succession in the order of selection. However, in a case where the manipulator has opted to select pieces of music without using the automatic random playback function or the automatic random playback function is unavailable, for example, when the disc jockey selects pieces of music one by one by taking the stage effect into consideration, more convenient operation is needed.

## SUMMARY OF THE INVENTION

The present invention is devised in view of the foregoing problems, and has an object to provide an information playback apparatus capable of making operations more convenient, for example, when one piece of music or the like is switched to another to be played continuously, and playing a sound which sounds natural during the switching manipulations.

In order to achieve the above and other objects, an information playback apparatus of the invention is an information playback apparatus, including: playback device for playing back information recorded in an information recording medium; manipulation device for specifying a start of repetitive playback; and control device for, when the manipulation device specifies the start of repetitive playback, controlling the playback device to repetitively play back information in a range from a point at which the start is specified to a point at which a certain time has passed.

According to the information playback apparatus of the invention arranged as above, once the start of repetitive playback is specified, the information in the range from the point at which the start of repetitive playback is specified to the point at which the certain time has passed is played back repetitively. Hence, this arrangement secures a time for the user or the like to perform a manipulation, for example, to select information, such as music, recorded in an information recording medium during repetitive playback without any complicated manipulation, and further, makes it possible to forestall a problem that playback of the information is terminated before playback of the selected information is started.

Moreover, it is the information following the information which has been played back until the start of repetitive playback is specified is playedback repetitively. Hence, when information, such as music, is played repetitively, for example, sounds which sound natural are played repetitively.

Also, in order to achieve the above and other objects, the information playback apparatus of the invention further includes: beat-number detecting device for detecting the number of beats per unit time of information being played back by the playback device, wherein the control device finds a time in proportion to a ratio of the number of beats per unit time measured by said beat-number detecting device at a time when said manipulation device specifies the start of repetitive playback to a pre-determined certain number of beats, and based on the found time, sets the information in the range from the point at which the start is specified to the point at which the certain time has passed, so as to render said playback device to perform repetitive playback.

According to the information playback apparatus of the invention arranged as above, when the start of repetitive playback is specified, the number of beats per unit time of the information being played back at this instance is found, and information to be played back during repetitive playback is set based on the number of beats thus found and the pre-determined certain number of beats.

When the information within the range set based on the number of beats per unit time of the information being played back and the certain number of beats is played back in this manner, for example, in a case where information, such as music, is played, the number of beats of sounds to be actually played during repetitive playback can be made substantially equal, thereby making it possible to play sounds which sound natural. In particular, in a case where information, such as music, is played repetitively, sounds which sound natural can be played when playback is repeated from the first information again following the last information.

Also, in order to achieve the above and other objects, the information playback apparatus of the invention further includes input device for inputting the certain number of beats.

According to the information playback apparatus of the invention arranged as above, the user or the like can perform repetitive playback at the number of beats (the number of beats per unit time) he desires, and for example, more convenient operation can be achieved.

## BRIEF DESCRIPTION OF THE DRAWINGS

These and other objects and advantages of the present invention will become clear from the following description with reference to the accompanying drawings, wherein:

Fig. 1 is a block diagram depicting an arrangement of an information playback apparatus of one embodiment of the invention;
Fig. 2 is a block diagram depicting an arrangement of a signal processing unit provided to the information playback apparatus of one embodiment of the invention;
Figs. 3(a) through 3(d) are views explaining the principles of forward playback, reverse playback, shuttle playback, and tempo change;
Fig. 4 is a view explaining the principle when loop playback is performed based on audio data for loop playback;
Fig. 5 is a flowchart detailing an operation in loop playback;
Fig. 6 is a flowchart further detailing an operation in loop playback; and
Fig. 7 is a flowchart further detailing an operation in loop playback.

## DETAILED DESCRIPTION OF THE PREFERRED EMBODIMENTS

The following description will describe one embodiment of an information playback apparatus of the invention with reference to the accompanying drawings. As a preferred embodiment, an explanation will be given to an information playback apparatus called an effector furnished with an editing function of producing sound effects by playing an information recording medium (hereinafter, referred to simply as a disc), such as a CD and a DVD, and applying signal processing in various manners to a played back signal.

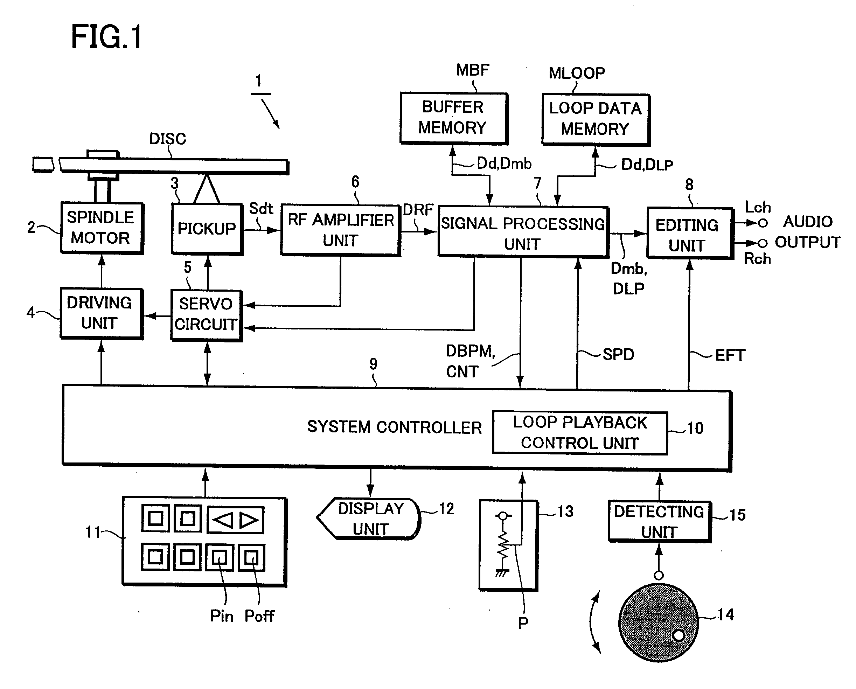

Fig. 1 is a block diagram depicting an arrangement of an information playback apparatus 1 of this embodiment, which is provided with: a spindle motor 2 for rotating a disc DISC at a predetermined linear velocity; a pickup 3 for optically reading out information recorded in a recording surface of the disc DISC and outputting a readout signal Sdt; a driving unit 4 for driving the spindle motor 2 with a supply of power; a servo circuit 5 for servo-controlling the driving unit 4 and the pickup 3; and an RF amplifier unit 6.

Further, the information playback apparatus 1 is provided with a signal processing unit 7, an editing unit 8, a buffer memory MBF, and a loop data memory MLOOP which together form the playback means, plus a system controller 9 having a loop playback control unit 10, an input unit 11, a display unit 12, a playback speed (tempo) adjusting unit 13, a jog dial 14, and a detecting unit 15.

The RF amplifier unit 6 generates playback data (hereinafter, referred to as RF data) DRF from the readout signal Sdt and supplies the same to the signal processing unit 7.

The servo circuit 5 servo-controls the spindle motor 2 through the driving unit 4, and servo-controls the pickup 3 as to its position with respect to the recording surface of the disc DISC to control the occurrence of a tracking error, a focus error, etc.

Although it is not shown in the drawing, a carriage unit for moving the pickup 3 back and forth along the radius of the disc DISC is provided, and so-called random access is achieved by adjusting the position of the pickup 3 with respect to an address in the disc DISC at a command from the system controller 9.

The system controller 9 is composed of a microprocessor (MPU) or the like furnished with computing and controlling functions, and is responsible for the central control on an operation of the entire information playback apparatus 1 in addition to the aforementioned servo-control while controlling the signal processing unit 7 and the editing unit 8.

The signal processing unit 7 is composed of a digital signal processor (DSP) furnished with a computing function.

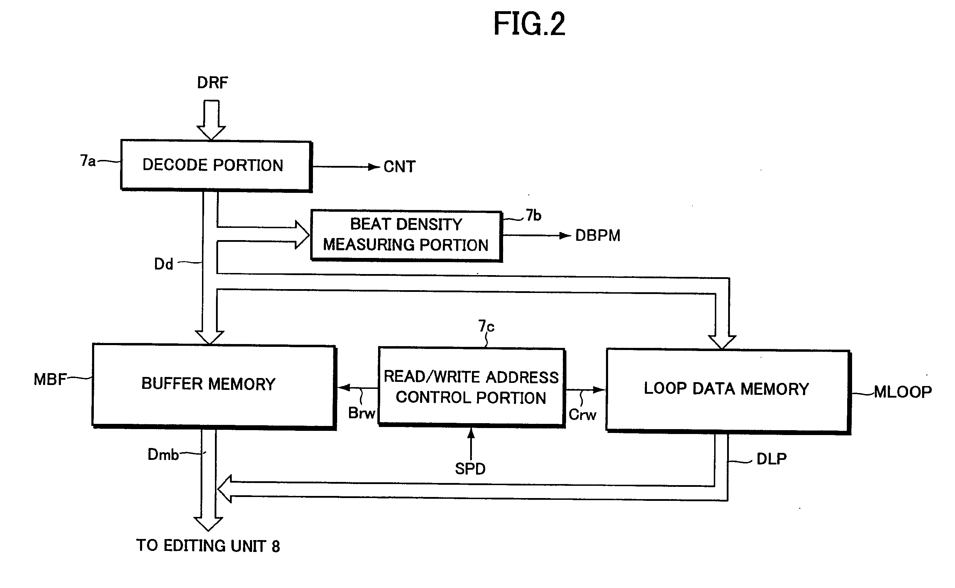

As shown in a block diagram of Fig. 2, the signal processing unit 7 includes a decode portion 7a, a beat density measuring portion 7b, and a read/write address control portion 7c, and makes a memory access to the buffer memory MBF and the loop data memory MLOOP through the read/write address control portion 7c.

The decode portion 7a decodes the RF data DRF supplied from the RF amplifier unit 6 in conformity with the standard of CDs and DVDs. The decode portion 7a thus converts the RF data DRF to demodulation data (symbol is omitted), then separates and extracts audio playback data and control data CNT for controlling seamless playback from the demodulation data, and decodes the audio playback data into audio data Dd which makes seamless playback possible, in accordance with the control contents in the separated and extracted control data CNT for seamless playback.

In other words, the control data CNT is the control data to achieve seamless playback of the address data, data of playback times corresponding to the addresses, synchronization data, program chain information (PGCI), etc. pre-recorded in the disc DISC, and in accordance with the control data CNT, the decode portion 7a decodes the audio playback data contained randomly in the RF data DRF into a stream of continuous audio data Dd which makes seamless playback possible. Also, the decode portion 7a supplies the system controller 9 with the separated and extracted control data CNT.

The beat density measuring portion 7b measures true beat density of music or the like being played in real time from the audio data Dd decoded in the decode portion 7a. Herein, the beat density means a tempo of music or the like, and is defined as beats (the number of beats) per unit time.

Herein, the beat density measuring portion 7b is provided with unillustrated digital band-pass filter, digital comparing circuit, and counting circuit. The beat density measuring portion 7b generates audio data Dd1 enhancing tempo components by allowing the audio data Dd which makes seamless playback possible and is outputted one after another from the decode portion 7a to pass through the digital band-pass filter in a predetermined frequency band. Then, it compares the audio data Dd1 with a predetermined threshold using the digital comparing circuit, extracts audio data Dd2 at levels higher than the predetermined threshold as the data indicating the tempo components. Further, it counts the number of generations of the audio data Dd2 per unit time using the counting circuit, and sets the counted number of generations per unit time as the true beat density (in other words, the number of beats per unit time) of music or the like being played. Then, it outputs the measurement result as beat density data DBPM to be supplied to the system controller 9 together with the aforementioned control data CNT.

In other words, a tempo is the number of beats per unit time which determines the melody of music or the like, and the beat density measuring portion 7b measures a tempo (the number of beats per unit time) of music or the like as the beat density by measuring the number of beats per unit time using the digital band-pass filter, the digital comparing circuit, and the counting circuit.

The true beat density does not indicate a temp of a sound after the original tempo of music or the like is changed with the tempo adjusting unit 13 or the jog dial 14 described below, but it means the beat density which indicates the original tempo of music or the like recorded in the disc DISC.

The read/write address control portion 7c controls data writing and data reading through a memory access to the buffer memory MBF and the loop data memory MLOOP, which are each composed of a large-capacity semiconductor memory, using read/write address control data Brw and Crw, respectively.

To be more specific, at a command from the system controller 9, the read/write address control portion 7c stores the audio data Dd supplied from the decode portion 7a at the addresses in the buffer memory MBF and the loop data memory MLOOP without disturbing the sequence which makes seamless playback possible, and outputs the audio data Dd stored in the buffer memory MBF and the loop data memory MLOOP as playback audio data Dmb and DLP, respectively. Herein, a memory access is controlled so that the playback audio data Dmb and the playback audio data DLP are not supplied to the editing unit 8 simultaneously.

Also, when the playback audio data Dmb is outputted, forward playback, reverse playback, and shuttle playback are set by changing the direction in which the readout addresses in the buffer memory MBF are specified using the read/write address control data Brw.

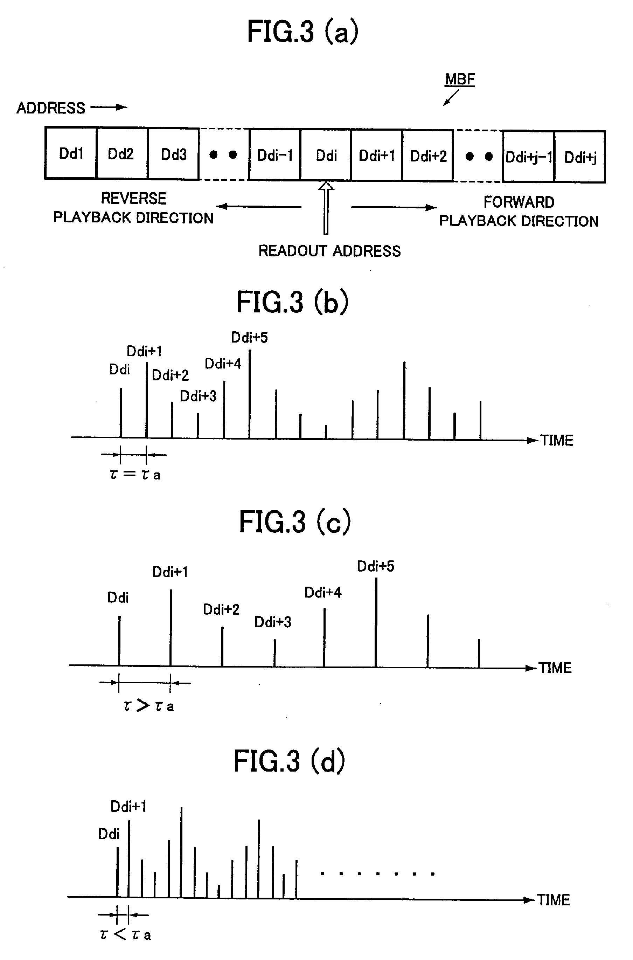

To be more specific, as shown in Fig. 3(a) by way of example, when many audio data Dd (indicated as Dd1 through Ddi+j in the drawing) stored at the addresses in the buffer memory MBF in the sequence which makes seamless playback possible, by moving the readout addresses specified by the read/write address control data Brw successively from the lower order address to the higher order address (in the forward playback direction in the drawing), audio data Dmb for forward playback is outputted.

In the case of reverse playback, by moving the readout addresses successively from the higher order address to the lower order address (in the reverse playback direction in the drawing), audio data Dmb for reverse playback is outputted. In the case of shuttle playback by which forward playback and reverse playback are performed alternately, the readout addresses are moved alternately in the aforementioned forward playback direction and reverse playback direction.

Further, during forward playback, reverse playback, and shuttle playback, the read/write address control portion 7c changes a switching time $\tau$ for successively switching the readout addresses with respect to the buffer memory MBF according to a control signal SPD supplied from the system controller 9. Hence, when music or the like is played, for example, it is possible to play sound effects at a tempo (the number of beats per unit time) different from the original tempo of the music or the like.

In other words, the output timing of the individual playback audio data Dmb is changed by changing the switching time $\tau$ for the individual readout addresses with respect to the buffer memory MBF.

For example, when music or the like recorded in the disc DISC is played without changing the tempo through forward playback, that is, in the case of playing music or the like at the original tempo through forward playback, as shown in Fig. 3(b) by way of example, the switching time $\tau$ for the readout addresses is adjusted to (made equal to) the normal switching time $\underline{\tau a}$ determined by the music or the like, and thus the output timing for the individual playback audio data Dmb (Ddi, Ddi+1, Ddi+2, and so forth) is set to the normal timing.

When sound effects are played at a tempo slower than the normal tempo determined by the music or the like, as shown in Fig. 3(c) by way of example, the switching timer $\tau$ for the readout addresses is set longer than the normal switching time $\underline{\tau a}$. Conversely, when sound effects are played at a tempo faster than the normal tempo, as shown in Fig. 3(d) by way of example, the switching time $\tau$ for the readout addresses is set shorter than the normal switching time $\underline{\tau a}$.

If the switching time $\tau$ for the individual readout addresses with respect to the buffer memory MBF is changed in this manner, when a digital-to-analog converter (not shown) provided in the editing unit 8 applies digital-to-analog conversionto the playback audio data Dmb, an analog audio signal So which makes it possible to play sound effects at a tempo different from the original tempo of music or the like is generated.

In other words, because the digital-to-analog converter performs digital-to-analog conversion based on a predetermined sampling cycle, it is possible produce sound effects at a tempo different from that of the original music or the like by changing the number of the playback audio data Dmb per unit time with respect to the sampling cycle.

Although it will be described in detail below, the user or the like can specify playback at a desired tempo by manipulating the tempo adjusting unit 13 or the jog dial 14.

Also, when the user or the like manipulates the disc-shaped rotatable jog dial 14 to rotate in a clockwise direction, forward playback is performed for playing sound effects at a tempo in response to the rotational speed. When the user or the like manipulates the jog dial 14 to rotate in a counter clockwise direction, reverse playback is performed for playing sound effects at a tempo in response to the rotational speed.

Further, when the user or the like manipulates the jog dial 14 back and forth in the clockwise direction and in the counter clockwise direction, shuttle playback is performed for playing sound effects at tempos in response to the rotational speeds in the respective directions.

The loop data memory MLOOP is provided to supply the editing unit 8 with the playback audio data DLP when performing "loop playback", which is a special function furnished to the information playback apparatus 1 of this embodiment.

To be more specific, the buffer memory MBF is provided to supply the editing unit 8 with the playback audio data Dmb by buffering the audio data Dd decoded in the decode portion 7a when normal forward playback, reverse playback or shuttle playback is performed. On the contrary, the loop data memory MLOOP is provided to supply the editing unit 8 with the playback audio data DLP when loop playback is performed in response to an ON-manipulation of a loop-in button key Pin described below by the user or the like.

Upon ON-manipulation of the loop-in button key Pin, the loop data memory MLOOP stores more than one audio data Dd corresponding to a time range from a point (hereinafter, referred to as a "loop-in-point") tin at which the ON-manipulation is performed to a point (hereinafter, referred to as a "loop-out-point) tout at which a predetermined time $T$ has passed, and outputs later the stored audio data Dd as the playback audio data DLP for loop playback.

Although it will be described in detail below, the system controller 9 sets a time (hereinafter, referred to as a "loop playback period") $T$ indicating a period from the loop-in-point tin to the loop-out-point tout.

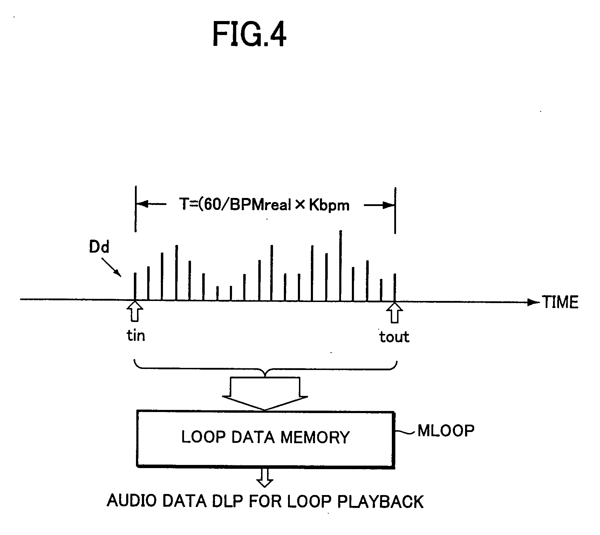

Also, the read/write address control portion 7c transfers the audio data Dd corresponding to a range of the loop playback period T as schematically shown in Fig. 4 from the buffer memory MBF to the loop data memory MLOOP to be stored therein. In other words, because the buffer memory MBF buffers many audio data Dd which makes seamless playback possible, when the loop-in button key Pin is manipulated to be ON, the audio data Dd has been already stored in a memory region corresponding to a range of the loop playback period $T$ from the loop-in-point tin to the loop-out-point tout. Hence, the read/write address control portion 7c transfers the audio data Dd stored in the memory region corresponding to the region of the loop playback period $T$ from the buffer memory MBF to the loop data memory MLOOP to be stored therein, whereby so-called copying of data is performed.

The read/write address control portion 7c changes the switching time $\tau$ for the readout addresses with respect to the loop data memory MLOOP, in accordance with a command from the loop playback control unit 10 provided in the system controller 9.

For this reason, even when loop playback is performed as the playback audio data DLP is supplied to the editing unit 8 from the loop data memory MLOOP, it is still possible to play sound effects at a tempo different from the normal tempo of music, for example.

Subsequently, the editing unit 8 outputs the analog audio signal So to sound a speaker by applying digital-to-analog conversion to the playback audio data Dmb or DLP supplied from the signal processing unit 7 using the aforementioned digital-to-analog converter, and then applying power amplification. Also, in a case where the playback audio data Dmb or DLP of the stereo system is supplied, the editing unit 8 isolates channels and outputs the analog audio signal So for each channel.

Further, the editing unit 8 pre-stores modulation data, such as a sawtooth wave, a rectangular wave, a triangular wave, a waveform imitating a sound of a jet plane, etc. Hence, when the user or the like specifies desired modulation data by manipulating a corresponding editing key provided to the input unit 11, modulation data is specified by the specification data EFT from the system controller 9. Then, the editing unit 8 modulates the playback audio data Dmb or DLP with the specified modulation data, and converts the modulated audio data into the analog audio signal So using the digital-to-analog converter, so as to be outputted. This arrangement allows various sound effects to be produced as the user or the like desires.

The input unit 11 is provided with a plurality of manipulation keys for the user or the like to manipulate the information playback apparatus 1. Besides the aforementioned loop-in button key Pin and editing keys, the input unit 11 is provided with a loop-off button key Poff to stop loop playback processing, and manipulation keys to specify a start, a stop, or a pause of playback.

The display unit 12 is composed of a display element, such as a liquid crystal display, and displays on-screen menus for presenting a manipulation method, etc. to the user or the like, and an operation status of the information playback apparatus 1.

The tempo adjusting unit 13 is composed of a variable resistor provided with an adjusting knob $P$, and is provided to change and adjust the aforementioned switching time $\tau$ for the readout addresses with respect to the buffer memory MBF.

To be more specific, when the user or the like adjusts the adjusting knob $P$ of the tempo adjusting unit 13 to a predetermined reference position, the system controller 9 detects a resistance value at the reference position, and judges that music or the like should be played at the original tempo. Then, it supplies the control signal SPD to the read/write address control portion 7c to set the readout timing for the playback audio data Dmb from the buffer memory MBF based on the normal switching time $\tau a$ corresponding to the detected resistance value.

When the user or the like deviates the adjusting knob $P$ from the reference position, music or the like is played at a tempo different from the original tempo. To be more specific, the system controller 9 detects a difference between the resistance value at the reference position and the resistance value at the deviated position, and supplies the control signal SPD to the read/write address control portion 7c to set the readout timing for the playback audio data Dmb from the buffer memory MBF based on the switching time $\tau$ ($\neq \tau a$) depending on the detected difference between the resistance values.

As has been described, the tempo adjusting unit 13 makes it possible to play sound effects at various tempos by adjusting the switching time $\tau$ for the readout addresses with respect to the buffer memory MBF, depending on the adjusted position of the adjusting knob $P$.

The jog dial 14 is, as described above, a rotatable manipulation member, and is provided to perform forward playback, reverse playback, and shuttle playback depending on the rotational direction, and to play sound effects at various tempos by adjusting the aforementioned switching time τ for the readout addresses with respect to the buffer memory MBF in response to the rotational speed.

The detecting unit 15 is provided with a rotary encoder for detecting the rotational speed and the rotational direction of the jog dial 14, and supplies the detection result from the rotary encoder to the system controller 9.

Upon receipt of the detection result from the detecting unit 15, the system controller 9 directs the read/write address control portion 7c to perform forward playback, reverse playback, or shuttle playback depending on the rotational direction of the jog dial 14, and to set the switching time τ in response to the rotational speed of the jog dial 14 using the control signal SPD to change the number of playback audio data Dmb per unit time. As a result, sound effects at various tempos can be played.

Further, the detecting unit 15 is provided with a pressure detecting sensor for detecting a pressing pressure when the user or the like touches the jog dial 14 by hand, and supplies the detection result of a pressing pressure to the system controller 9.

To be more specific, a distortion sensing element whose resistance value varies with a pressing pressure is provided at the back surface of the jog dial 14. When the user or the like manipulates the jog dial 14 to be depressed by tapping the top surface portion thereof with a force at or above a predetermined value, the pressure detecting sensor supplies the system controller 9 with a change in the resistance value of the distortion sensing element as the detection result of the pressing pressure.

Upon reception of the detection result of the pressing pressure, the system controller 9 counts the number of depressing manipulations per unit time, and judges that the counted number per unit time is the tempo of sound effects the user or the like desires. Then, the system controller 9 directs the read/write address control portion 7c using the control signal SPD to set the switching time τ in response to the depressing speed to change the number of playback audio data Dmb per unit time outputted from the buffer memory MBF in order to play sound effects at the tempo the user or the like desires.

As has been described, the user or the like manipulates the tempo adjusting unit 13 or the jog dial 14 when he/she wishes to play sound effects at a tempo different from that of the original music or the like.

The jog dial 14 is used to play sound effects at a tempo in response to a rotational speed or a depressing speed while it is manipulated to rotate or to be depressed, and therefore, is furnished with a function of adjusting a tempo dynamically. On the other hand, the tempo adjusting unit 13 is used to play sound effects at a tempo corresponding to the position of the adjusting knob P. Hence, even when the adjusting knob P stays at rest, sound effects can be played continuously at the tempo corresponding to the resting position. Therefore, the tempo adjusting unit 13 is furnished with a function for adjusting a tempo statically.

The system controller 9 controls the read/write address control portion 7c to set a basic switching time τ depending on the position of the adjusting knob P of the tempo adjusting unit 13, and then to change the basic switching time τ in response to the rotational seed or the depressing speed of the jog dial 14. Hence, the tempo adjusting unit 13 is provided to set the basic tempo when playing music or the like, and the jog dial 14 is provided to further change a tempo with reference to the basic tempo set by the tempo adjusting unit 13.

The loop playback control unit 10 is achieved by running a predetermined system program on the micro processor (MPU) provided to the system controller 9. When the aforementioned loop-in button key Pin is manipulated to be ON, it computes the loop playback period T from the loop-in-point tin to the loop-out-point tout, during which loop playback should be performed. Further, it controls the signal processing unit 7 to continue loop playback with the playback data DLP stored in the loop data memory MLOOP until the loop-off button key Poff is manipulated to be ON.

To give a more detailed description with reference to Fig. 4, when the loop-in button key Pin is manipulated to be ON, the loop playback control unit 10 computes the beat density (that is, a tempo) BPMreal of a sound actually being played at the point (that is, the loop-in-point) tin at which the loop-in button key Pin is manipulated to be ON.

Herein, instead of finding the actual beat density from the analog audio signal So generated in the editing unit 8 and supplied to the speaker or the like, the beat density BPMreal of a sound actually being played is computed from Equation (1) below based on the beat density data DBPM indicating the true beat density outputted from the beat density measuring portion 7b at the point (that is, the loop-in-point) tin at which the loop-in button key Pin is manipulated to be ON, and the switching time τ for the readout address with respect to the buffer memory MBF set by the control signal SPD at this point tin:

$$BPMreal = DBPM \times \tau \qquad (1)$$

In other words, as described above, the switching time τ for the individual readout addresses with respect to the buffer memory MBF is set depending on the position of the adjusting knob P provided to the tempo adjusting unit 13, or in response to the rotational speed or the depressing speed of the jog dial 14. Hence, the beat density BPMreal of the sound actually being played when the user or the like manipulates the tempo adjusting unit 13 or the jog dial 14 can be found by computing Equation (1) above.

Further, the loop playback control unit 10 computes the loop playback period $T$ from the loop-in-point tin to the loop-out-point tout by substituting the beat density BPMreal into Equation (2) :

$$T = (60/\text{BPMreal}) \times \text{Kbpm} \qquad (2)$$

In Equation (2) above, a constant "60" is 60 seconds, and a coefficient Kbpm is the beat density of a sound to be played actually during loop playback based on the playback audio data DLP. The user or the like pre-sets the coefficient Kbpm using a corresponding manipulation key provided to the input unit 11.

Hence, according to Equation (2) above, by multiplying the inverse (that is, 1/BPMreal) of the actually measured beat density BPMreal by the pre-set certain beat density Kbpm, a ratio (Kbpm/BPMreal) of the beat density BPMreal and the beat density Kbpm is found, and by multiplying the ratio (Kbpm/BPMreal) by the constant "60 seconds", the time (loop playback period) $T$ during which loop playback should be performed is computed.

Having found the loop playback period $T$ from the loop-in-point tin to the loop-out-point tout, the loop playback control unit 10 directs the read/write address control portion 7c in the signal processing unit 7 to transfer more than one audio data Dd stored in the memory region corresponding to the loop playback period $T$ from the buffer memory MBF to the loop data memory MLOOP to be stored therein, and then to set the switching time $\tau$ for the readout addresses with respect to the loop data memory MLOOP to a time corresponding to the coefficient Kbpm, so that the playback audio data DLP corresponding to a range of the loop playback period $T$ is repetitively outputted until the loop-off button key Poff is manipulated to be ON.

Accordingly, the playback audio data DLP is supplied successively to the editing unit 8 from the loop-in-point tin to the loop-out-point tout in sync with the switching time $\tau$. Further, repetitive processing is performed, in which when the playback audio data DLP corresponding to the loop-out-point tout has been outputted, the playback audio data DLP is successively outputted from the loop-in-point tin again.

In the meantime, loop playback is ended at the instant the loop-off button key Poff is manipulated to be ON.

For example, when the user or the like sets the coefficient Kbpm to "4" using the corresponding manipulation key in the input unit 11, "4 beats" is pre-set as the beat density of sounds to be played during loop playback, and when he/she sets the coefficient Kbpm to "8," "8 beats" is pre-set as the beat density of sounds to be played during loop playback.

When the user manipulates the loop-in button key Pin to be ON at a given point while music or the like recorded in the disc DISC is playing with the coefficient Kbpm being pre-set to "4," for example, if the beat density (BPMreal) of a sound actually being played at this loop-in-point tin is 60 beats per minute (60 bpm), for example, then the loop playback control unit 10 sets four seconds as the loop playback period $T$ from the loop-in-point tin to the loop-out-point tout according to the relation in Equation (2) above.

Hence, in this case, loop playback is performed, in which sounds of "4 beats" are repetitively played based on more than one playback audio data DLP corresponding to the loop playback period $T$ (= 4 seconds).

When the user manipulates the loop-in button key Pin to be ON with the coefficient Kbpm being pre-set to "8," for example, if the beat density (BPMreal) of a sound actually being played at this loop-in-point tin is 60 beats per minute (60 bpm), for example, then the loop playback control unit 10 sets eight seconds as the loop playback period $T$ from the loop-in-point tin to the loop-out-point tout according to the relation in Equation (2) above.

Hence, in this case, loop playback is performed, in which sounds of "8 beats" are repetitively played based on more than one playback audio data DLP corresponding to the loop playback period $T$ (= 8 seconds).

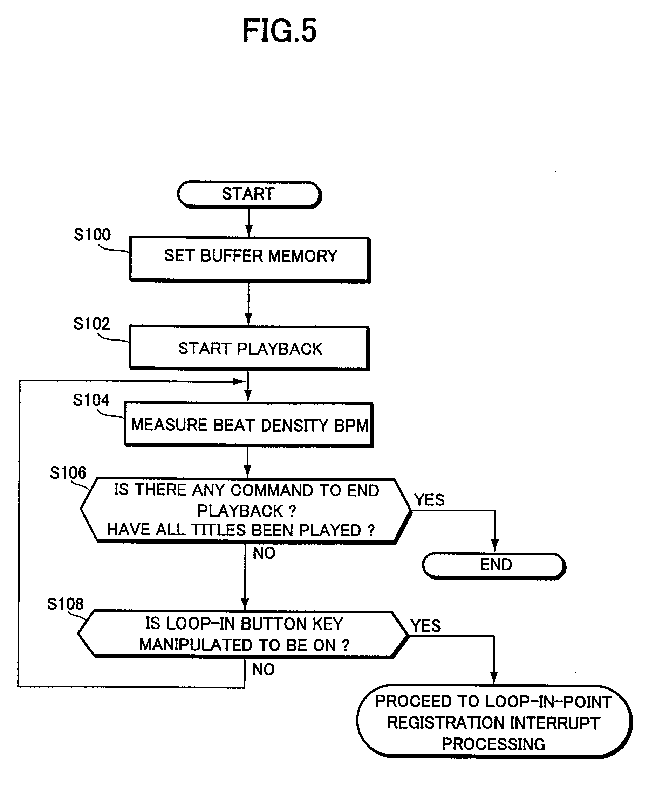

Next, the following description will describe manipulations for the information playback apparatus 1 arranged as above with reference to flowcharts of Figs. 5 through 7. Herein, an explanation will be given to loop playback performed under the control of the system controller 9 when the user or the like manipulates the loop-in button key Pin to be ON.

Referring to Fig. 5, when the user or the like inserts a desired disc DISC into the information playback apparatus 1 and specifies a start of playback, the system controller 9 directs the read/write address control portion 7c to make settings so that the audio data Dd decoded in the decode portion 7a is supplied to the editing unit 8 through the buffer memory MBF, while inhibiting a memory access to the loop data memory MLOOP (Step S100). Subsequently, normal playback processing is started (Step S102).

Then, in Step S104, the beat density measuring portion 7b measures the true beat density BPM of music or the like being played.

Then, in Step S106, whether the user or the like specifies to end the playback or whether all the pieces of music or the like (that is, all the titles) recorded in the disc DISC have been played is judged. When it is judged that neither of these conditions is met, the process proceeds to Step S108, and when it is judged that at least one of these conditions is met, the playback processing is terminated.

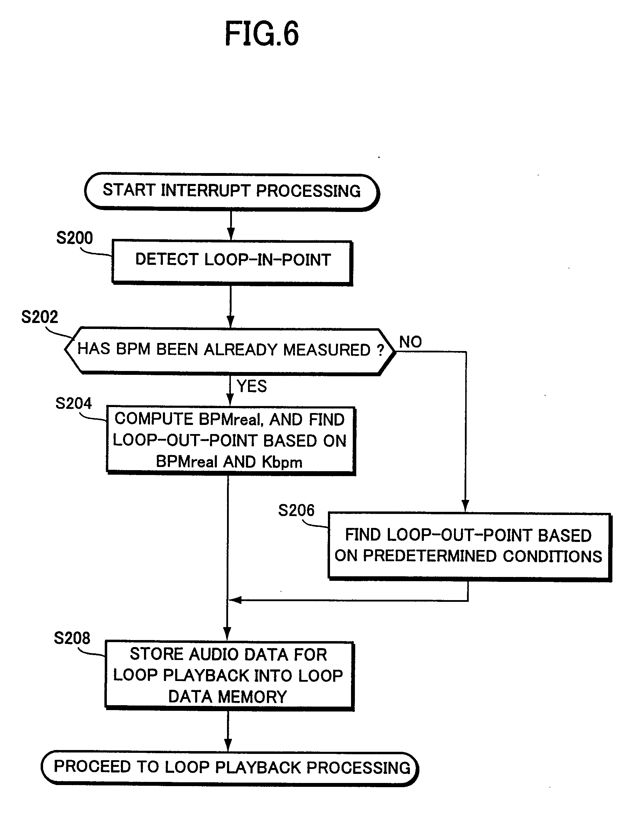

When the process proceeds to Step S108, whether the loop-in button key Pin is manipulated to be ON is detected. When it is not manipulated to be ON, the process returns to Step S104 and the normal playback operation is continued. When it is manipulated to be ON, the process proceeds to loop-in-point registration interrupt processing performed by the loop playback control unit 10 as detailed in Fig. 6.

The loop-in-point registration interrupt processing of Fig. 6 begins with Step S200, in which the loop playback control unit 10 detects the address at which stored is the playback audio data Dmb being played back at the time when the loop-in button key Pin is manipulated to be ON, that is, the address in the buffer memory MBF corresponding to the loop-in-point tin.

Then, in Step S202, whether the true beat density has been measured in Step S104 described above is judged. More specifically, because the beat density measuring portion 7b measures the beat density by counting the number of beats per certain predetermined time, there may be a case that the beat density has not been measured if the certain time has not passed yet. Thus, whether the true beat density has been measured in Step S104 described above is judged for confirmation.

When the true beat density has been measured, the process proceeds to Step S204; otherwise, the process proceeds to Step S206.

When the process proceeds to Step S204, computations of Equations (1) and (2) above are performed, so that the beat density BPMreal of a sound actually being played at the loop-in-point tin is computed, and further, the loop playback period $T$ during which loop playback should be performed is computed, and the readout address in the buffer memory MBF at which stored is the playback audio data Dmb corresponding to the loop-out-point tout is detected, after which the process proceeds to Step S208.

On the other hand, when the process proceeds to Step S206, because the true beat density has not been measured, instead of the true beat density, the quasi-beat density (dummy beat density) registered in advance is used for Equations (1) and (2) above, and the quasi-beat density BPMreal' at the loop-in-point tin is computed. Further, based on the quasi-beat density BPMreal', the loop playback period $T$ during which loop playback should be performed is computed and the readout address in the buffer memory MBF at which stored is the playback audio data Dmb corresponding to the loop-out-point tout is detected, after which the process proceeds to Step S208.

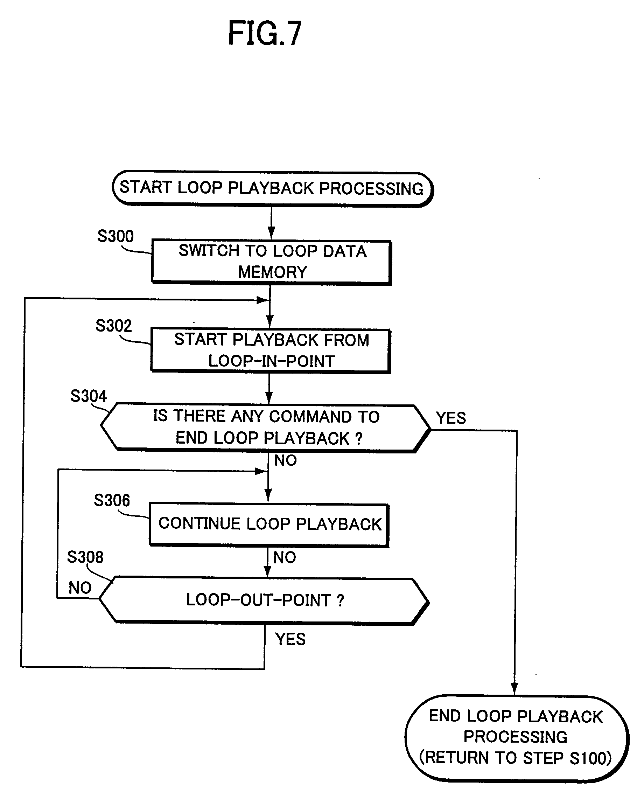

In Step S208, more than one playback audio data (the playback audio data corresponding to the loop playback period $T$) Dmb stored between two readout addresses in the buffer memory MBF respectively corresponding to the loop-in-point tin and the loop-out-point tout found in Step S204 or S206 described above is transferred to the loop data memory MLOOP to be stored therein, whereupon the loop-in-point registration interrupt processing is completed. Then, the process proceeds to loop playback processing detailed in Fig. 7.

The loop playback processing detailed in Fig. 7 begins with Step S300, in which a data output from the buffer memory MBF to the editing unit 8 is inhibited, and the operation is switched to a data output from the loop data memory MLOOP to the editing unit 8.

Then, in Step S302, data readout is started from the playback audio data DLP corresponding to the loop-in-point tin to the playback audio data DLP corresponding to the loop-out-point tout stored in the loop datamemory MLOOP. Herein, the readout addresses are set in sync with the switching time $\tau$ corresponding to the aforementioned coefficient Kbpm.

Then, in Step S304, whether the loop-off button key Poff is manipulated to be ON is judged to check whether there is any command to end loop playback. When there is a command to end loop playback, the loop playback processing is terminated, and the process proceeds to the processing which begins with Step S100 of Fig. 5 described above.

On the other hand, when there is no command to end loop playback, the process proceeds to Step S306 to continue loop playback, and further, in Step S308, whether the playback audio data DLP up to the address corresponding the loop-out-point tout has been played is judged.

When the playback audio data DLP up to the address corresponding the loop-out-point tout has not been played yet, the process returns to Step S306 to continue loop playback. When the playback audio data DLP up to the address corresponding the loop-out-point tout has been played, the process returns to Step S302, so that the playback audio data DLP at the address corresponding to the loop-in-point tin is read out again to continue loop playback.

Loop playback is continued until the loop-off button key Poff is manipulated to be ON in Step S304 described above, and when the loop-off button key Poff is manipulated to be ON, the process returns to the processing which begins with Step S100 of Fig. 5.

In other words, the user or the like selects a piece of music or the like to be played next or replaces a disc DISC and selects a desired piece of music or the like recorded in the new disc DISC while loop playback is performed, and after he/she finishes the foregoing manipulation, he/she manipulates the loop-off button key Poff to be ON. In response to this ON-manipulation, the loop playback processing is terminated, and the processing which begins with Step S100 of Fig. 5 is started again, whereby the selected next piece of music is played continuously.

As has been described, according to the information playback apparatus 1 of this embodiment, the playback processing is repeated based on the playback audio data DLP corresponding to the certain loop playback period $T$ since the loop-in button key Pin is manipulated to be ON until the loop-off button key Poff is manipulated to be ON. This secures a time for the user or the like to select a piece of music or the like to be played next, for example, until he/she manipulates the loop-off button key Poff to be ON.

Because music or the like is played continuously while loop playback is performed, the problem that a sound-cut or the like occurs before the next piece of music or the like is started to play can be eliminated, and the user or the like is freed from complicated manipulations that he/she has to select a piece of music or the like to be played next in a hurry.

When the loop-in button key Pin is manipulated to be ON, the audio data of music or the like which has been played until the ON-manipulation is stored in the loop data memory MLOOP from the address corresponding to the loop-in-point tin to the address corresponding to the loop-out-point tout, and loop playback is performed based on the audio data DLP stored in the loop data memory MLOOP in this manner. Hence, it is possible to provide sounds which sound natural.

In other words, when the user or the like switches a piece of music or the like which has been played to a different piece of music, and selects a piece of music to be played next while the switched piece of music is playing, if the piece of music which has been played and the piece of music which is playing while the selection is made differ in tempo, it may sound somewhat unnatural to the user.

However, according to the information playback apparatus 1 of this embodiment, a piece of music which has been played is played continuously during loop playback, and sounds which sound natural to the user are thereby played.

In regard to the information playback apparatus 1, it should be noted that, as has been described with reference to Equations (1) and (2) above, the beat density BPMreal of music or the like actually being played at the time when the loop-in button key Pin is manipulated to be ON is measured, and the loop playback period $T$ corresponding to the pre-set beat density Kbpm is computed based on the actual beat density BPMreal, so that the loop-in-point tin and the loop-out-point tout are set to specify the playback audio data DLP to be played during loop playback.

For this reason, when loop playback is performed based on the playback audio data DLP thus specified, the beat densities of sounds to be actually played during loop playback can be substantially homogeneous. That is, tempos of sounds to be actually played are substantially constant (in other words, beat intervals can be almost equal), thereby making it possible to provide sounds which sound natural at a stable tempo during loop playback.

In particular, as detailed in Fig. 7, when the playback audio data corresponding to the loop-out-point tout has been played in Step S308 and the process returns to Step 302 to continue to play the playback audio data corresponding to the loop-in-point tin again, tempos of the sounds can be controlled not to change discontinuously, and therefore, sounds which sound natural can be provided during loop playback.

The above embodiment described the information playback apparatus 1 for playing a CD or a DVD. However, it goes without saying that the invention can be applied to an information playback apparatus for an information recording medium, such as an MD, capable of recording and playing back information basically in accordance with the principle similar to that of the embodiment above.

According to the information playback apparatus of the invention arranged as above, there is provided a manipulation means for specifying a start of repetitive playback, so that once the start of repetitive playback is specified, the information in the range from the point at which the start of repetitive playback is specified to the point at which the certain time has passed is played back repetitively. Hence, this arrangement secures a time for the user or the like to perform a manipulation, for example, to select information, such as music, recorded in an information recording medium during repetitive playback without any complicated manipulation, and further, makes it possible to forestall a problem that playback of the information is terminated before playback of the selected information is started. Moreover, it is the information following the information which has been played back until the start of repetitive playback is specified is played back repetitively. Hence, when information, such as music, is played repetitively, for example, sounds which sound natural are played repetitively.

According to the information playback apparatus of the invention arranged as above, when the start of repetitive playback is specified, the number of beats per unit time of the information being played back at this instance is found, and information to be played back during repetitive playback is set based on the number of beats thus found and the pre-determined certain number of beats.

When the information within the range set based on the number of beats per unit time of the information being played back and the certain number of beats is played back in this manner, for example, in a case where information, such as music, is played, the number of beats of sounds to be actually played during repetitive playback can be made substantially equal, thereby making it possible to play sounds which sound natural. In particular, in a case where information, such as music, is played repetitively, sounds which sound natural can be played when playback is repeated from the first information again following the last information.

Also, since the information playback apparatus of the invention further includes input means for inputting the certain number of beats, the user or the like can perform repetitive playback at the number of beats (the number of beats per unit time) he desires, and for example, more convenient operation can be achieved.

While there has been described what are at present considered to be preferred embodiments of the present invention, it will be understood that various modifications may be made thereto, and it is intended that the appended claims cover all such modifications as fall within the true spirit and scope of the invention.

**Claims**

1. An information playback apparatus (1), comprising:

   - playback means for playing back information recorded in an information recording medium (DISC);
   - manipulation means (11) for specifying a start of repetitive playback; and
   - control means (9) for, when the manipulation means (11) have specified the start of repetitive playback, controlling the playback means to repetitively play back information in a range from a point at which the start has been specified to a point at which a certain time has passed.

2. The apparatus (1) according to claim 1, further comprising:

   - beat-number detecting means (7b) for detecting the number of beats per unit time of information being played back by the playback means;
   - wherein the control means (9) find a time in proportion to a ratio of the number of beats per unit time measured by the beat-number detecting means (7b) at a time when the manipulation means (11) have specified the start of repetitive playback to a predetermined certain number of beats, and based on the found time, set the information in the range from the point at which the start has been specified to the point at which the certain time has passed, so as to render the playback means to perform repetitive playback.

3. The apparatus according to claim 2, further comprising input means (11) for inputting he certain number of beats.

# FIG.1

EP 1 318 519 A2

# FIG.2

DRF

7a — DECODE PORTION → CNT

BEAT DENSITY MEASURING PORTION — 7b → DBPM

Dd

7c

MBF — BUFFER MEMORY ← READ/WRITE ADDRESS CONTROL PORTION → LOOP DATA MEMORY — MLOOP

Brw    Crw

SPD

Dmb

DLP

TO EDITING UNIT 8

EP 1 318 519 A2

# FIG.3 (a)

MBF

ADDRESS →

| Dd1 | Dd2 | Dd3 | ● ● | Ddi−1 | Ddi | Ddi+1 | Ddi+2 | ● ● | Ddi+j−1 | Ddi+j |

REVERSE
PLAYBACK DIRECTION  ←

READOUT ADDRESS  ↑

→  FORWARD
PLAYBACK DIRECTION

# FIG.3 (b)

Ddi+5

Ddi+1

Ddi

Ddi+2

Ddi+4

Ddi+3

→ TIME

$\tau = \tau a$

# FIG.3 (c)

Ddi+1

Ddi+5

Ddi

Ddi+2

Ddi+4

Ddi+3

→ TIME

$\tau > \tau a$

# FIG.3 (d)

Ddi+1

Ddi

. . . . . . .

→ TIME

$\tau < \tau a$

14

# FIG.4

$$T=(60/BPMreal \times Kbpm)$$

Dd

tin

tout

TIME

LOOP DATA MEMORY — MLOOP

AUDIO DATA DLP FOR LOOP PLAYBACK

# FIG.5

```
                    ┌──────────────┐
                    │    START     │
                    └──────┬───────┘
                           │
                           ▼
S100          ┌─────────────────────────┐
              │    SET BUFFER MEMORY     │
              └────────────┬────────────┘
                           │
                           ▼
S102          ┌─────────────────────────┐
              │     START PLAYBACK       │
              └────────────┬────────────┘
                           │
                           ▼
S104          ┌─────────────────────────┐
              │ MEASURE BEAT DENSITY BPM │
              └────────────┬────────────┘
                           │
                           ▼
S106      ╱─────────────────────────────────╲       YES
         ╱   IS THERE ANY COMMAND TO END      ╲──────────┐
         ╲         PLAYBACK ?                  ╱          │
         ╲   HAVE ALL TITLES BEEN PLAYED ?    ╱           ▼
          ╲─────────────────┬───────────────╱      ┌──────────┐
                         NO │                       │   END    │
                            │                       └──────────┘
                            ▼
S108      ╱─────────────────────────────────╲       YES
         ╱     IS LOOP-IN BUTTON KEY          ╲──────────┐
         ╲     MANIPULATED TO BE ON ?         ╱          │
          ╲─────────────────┬───────────────╱           ▼
                         NO │                  ┌───────────────────────┐
                            │                  │ PROCEED TO LOOP-IN-POINT│
                            │                  │ REGISTRATION INTERRUPT  │
                            │                  │      PROCESSING         │
                            │                  └───────────────────────┘
```

16

# FIG.6

START INTERRUPT PROCESSING

S200 DETECT LOOP-IN-POINT

S202 HAS BPM BEEN ALREADY MEASURED ? — NO

YES

S204 COMPUTE BPMreal, AND FIND LOOP-OUT-POINT BASED ON BPMreal AND Kbpm

S206 FIND LOOP-OUT-POINT BASED ON PREDETERMINED CONDITIONS

S208 STORE AUDIO DATA FOR LOOP PLAYBACK INTO LOOP DATA MEMORY

PROCEED TO LOOP PLAYBACK PROCESSING

# FIG.7

START LOOP PLAYBACK PROCESSING

S300 SWITCH TO LOOP DATA MEMORY

S302 START PLAYBACK FROM LOOP-IN-POINT

S304 IS THERE ANY COMMAND TO END LOOP PLAYBACK ?  → YES

NO

S306 CONTINUE LOOP PLAYBACK

NO

S308 LOOP-OUT-POINT ?  NO

YES

END LOOP PLAYBACK PROCESSING (RETURN TO STEP S100)